# FASCICULE DE BREVET EUROPEEN

(11) **EP 1 859 251 B1**
(45) Date de publication et mention de la délivrance du brevet: **15.08.2012**
(21) Numéro de dépôt: 06708735.3
(22) Date de dépôt: 13.03.2006
(51) Int. Cl.: G01N 3/30, G01N 3/313

(54) **CHAINE DE MESURE DE CHOCS PYROTECHNIQUES ET PROCEDE DE QUALIFICATION DE CETTE CHAINE**
KETTE ZUR MESSUNG PYROTECHNISCHER EINSCHLÄGE UND VERFAHREN ZUR BEWERTUNG DER KETTE
CHAIN FOR MEASURING PYROTECHNICAL IMPACTS AND METHOD FOR QUALIFYING SAID CHAIN

(30) Priorité: 15.03.2005 FR 0550659
(43) Date de publication de la demande: 28.11.2007
(73) Titulaire: ASTRIUM SAS, 75016 Paris (FR)
(72) Inventeur: ROUSSEL, Vincent, F-33160 St Medard En Jalles (FR)
(74) Mandataire: Poulin, Gérard
(86) Numéro de dépôt international: PCT/EP2006/060647
(87) Numéro de publication internationale: WO 2006/097442

(56) Documents cités:
- DE-A1- 3 828 968
- GB-A- 2 146 775
- US-A- 3 453 457
- US-A- 5 092 173
- US-A- 5 565 626
- US-B1- 6 655 189
- LAWRENCE A ED - LING F F GLOYNA E F HART W H (EDS ): "Modern Inertial Technology" MODERN INERTIAL TECHNOLOGY. NAVIGATION, GUIDANCE, AND CONTROL, MECHANICAL ENGINEERING SERIES, NEW YORK, NY : SPRINGER, US, 1992, pages 239-259, XP002138213 ISBN: 0-387-98507-7
- PATENT ABSTRACTS OF JAPAN vol. 2000, no. 06, 22 septembre 2000 (2000-09-22) & JP 2000 074939 A (DENSO CORP), 14 mars 2000 (2000-03-14)

## Description

### DOMAINE TECHNIQUE

L'invention concerne une chaîne de mesure de chocs pyrotechniques destinée à la mesure des accélérations dans une gamme de 1g à 500000g et des fréquences dans une gamme de 1Hz à 500000Hz, comprenant des moyens de mesure et un système d'acquisition des mesures. Elle concerne également un procédé de qualification d'une chaîne de mesure de chocs pyrotechniques comprenant au moins un accéléromètre et un système d'acquisition du signal de cet accéléromètre.

Les véhicules spatiaux, qu'il s'agisse de lanceurs, de sondes, de véhicules de rentrée, sont équipés de systèmes pyrotechniques destinés à assurer les séparations : séparation d'étages au lancement, mais aussi séparation de charges utiles, séparation de modules de descente, séparation de modules de services, etc.

Lors du fonctionnement de ces dispositifs qui mettent en oeuvre un explosif, la détonation de ce dernier induit des vibrations intenses qui se propagent dans tout le véhicule spatial sous forme d'ondes de chocs et de champs vibratoires. Ces vibrations sont susceptibles d'endommager gravement tous les éléments qui constituent le véhicule spatial, à savoir d'une part ses structures et d'autre part, ses équipements.

Il est donc essentiel de s'assurer, lors de la conception et de la construction du véhicule spatial, que tous ces éléments peuvent supporter ces sollicitations et remplir leur fonction pendant toute la durée de vie du véhicule. A cette fin, on réalise des simulations de chocs pyrotechniques par des moyens mécaniques ou pyrotechniques.

La simulation pyrotechnique présente l'avantage d'être par définition une reproduction parfaite du choc pyrotechnique réel. L'invention se rapporte plus particulièrement à ce mode de simulation.

Les moyens de simulation pyrotechniques comprennent un système de contrôle des chocs qui permet de mesurer le choc appliqué. Les chocs se mesurent au moyen de capteurs d'accélération, également appelés accéléromètres, qui mesurent l'intensité des accélérations en fonction du temps. Les courbes qui résultent de cette mesure sont appelées « signaux temporels » car elles représentent directement l'accélération subie par la structure en fonction du temps.

Les courbes de signaux temporels sont peu exploitables en l'état. Elles doivent par conséquent être analysées en termes de fréquences, sous la forme d'un diagramme d'intensité de l'accélération en fonction de la fréquence. Ce diagramme est appelé spectre de réponse aux chocs « SRC ». Il donne une estimation du pic d'accélération vu par une structure à une fréquence donnée.

Le spectre positif représente les accélérations positives subies par la structure tandis que le spectre de réponse négative représente les accélérations négatives (décélérations) subies par la structure.

On distingue deux situations expérimentales vibratoires distinctes en fonction de la distance entre la mesure et la source de la détonation.

On parle de « champ proche » à très courte distance de la source (0,2 m environ). Le choc initial n'est pas amorti et toutes les fréquences jusqu'aux plus hautes (5x10⁵ Hz) sont détectées avec des accélérations très élevées jusqu'à 5x10⁵ g à haute fréquence.

Plus loin de la source (au-delà de 1 m), on parle de « champ lointain ». Les hautes fréquences sont amorties. Au-dessus de 10⁴ Hz, l'accélération ne croît plus avec la fréquence. Elle peut même diminuer. Les accélérations ne dépassent pas 10³ g. Par contre, les vibrations ont excité les modes propres des structures si bien que le SRC peut présenter des pics dans le domaine au dessous de 10⁴ Hz.

Toutefois, la mesure des chocs pyrotechniques soulève de grandes difficultés en raison des plages très étendues de fréquences et d'accélérations. La plage de fréquences va au moins de 1 Hz à 500 000 Hz tandis que la plage d'accélérations s'étend au moins de 1 g à 500 000 g.

Les chaînes de mesures doivent donc satisfaire des exigences contradictoires. La chaîne de mesure, particulièrement son capteur d'accélération, doit être capable de survivre à de très fortes accélérations. Toutefois, un capteur conçu pour résister à de très fortes accélérations sera peu précis pour la mesure de faibles accélérations. Inversement, un capteur conçu pour la mesure de faibles accélérations risque de ne pas survivre à de très fortes accélérations. En outre, même s'il n'est pas détruit, la chaîne de mesure risque d'être perturbée de telle sorte que les résultats qu'elle fournit ne seront pas exploitables.

L'invention a par conséquent pour objet une chaîne de mesure qui remédie à ce problème en permettant une mesure fiable et reproductible d'accélérations dans un domaine de 1g à 500000g pour des fréquences allant de 1Hz à 500000Hz.

Ces buts sont atteints, par le fait que l'invention comporte les moyens définis dans la revendication 1.

Avec cette chaîne de mesure, on retient le signal délivré par le capteur « basse fréquence » en basses fréquences, par exemple en dessous de 1000Hz et le signal délivré par le capteur « haute fréquence » en hautes fréquences, par exemple au-dessus de 10000Hz. En fréquences intermédiaires, les signaux des deux capteurs se recoupent.

Avantageusement, le capteur prévu pour la mesure des basses fréquences et des basses accélérations est un capteur de type PCB 350B02 de la société PCB Piezotronics Inc.

Avantageusement encore, le capteur prévu pour la mesure des hautes fréquences et des hautes accélérations est un capteur de type 7270A de la société Endevco Inc.

L'invention a d'autre part pour objet un procédé de validation d'une chaîne de mesure qui permet de vérifier qu'elle satisfait aux exigences contradictoires imposées par la mesure des chocs pyrotechniques et plus particulièrement qu'elle est apte à concilier une sensibilité à faibles accélérations avec une résistance à de très fortes accélérations.

Ces buts sont atteints conformément à l'invention, par le fait que le procédé comprend les étapes énumérées dans la revendication 4.

De préférence, le ou les points de mesures sont choisis sur un cercle centré au point d'excitation.

Avantageusement, on injecte de l'énergie dans la structure d'expérimentation jusqu'à une fréquence maximale de 250 Hz environ.

De la sorte, on évite d'exciter les modes de vibration de la structure au-delà d'une fréquence de 250 Hz, ce qui permet d'optimiser l'étendue de la mesure sans craindre de saturer l'acquisition du signal temporel.

Dans une étape du procédé, l'excitation de la structure expérimentale à son point d'excitation est réalisée en appliquant un choc mécanique au moyen d'un marteau.

En effet, les chocs mécaniques présentent certains avantages. Ils sont relativement faciles à mettre en oeuvre, ils sont peu coûteux et présentent peu de risque pour les personnels.

Le marteau est avantageusement muni d'un embout en caoutchouc.

Dans un mode de réalisation préféré, on réalise l'étape de test de l'accéléromètre en exécutant les étapes suivantes :
- on déduit les spectres de réponse positif et négatif de la réponse temporelle de la structure d'expérimentation à l'excitation ;
- on calcule le différentiel entre les spectres de réponse positif et négatif ;
- on élimine les chaînes de mesure pour lesquelles ce différentiel diffère significativement de zéro à une ou plusieurs fréquences d'excitation.

Avantageusement, l'accéléromètre comporte un amortisseur mécanique et un amortisseur électrique intégrés.

### BRÈVE DESCRIPTION DES DESSINS

D'autres caractéristiques et avantages de l'invention apparaîtront encore à la lecture de la description qui suit d'exemples de réalisation donnés à titre illustratif en référence aux figures annexées. Sur ces figures :
- la figure 1 est une vue en perspective d'une plaque carrée choisie en tant que structure expérimentale pour la mise en oeuvre du procédé de l'invention ;
- la figure 2 est une représentation des lignes nodales d'un mode de vibration de la structure d'expérimentation représentée sur la figure 1 ;
- la figure 3 est une vue en plan partielle de l'implantation des accéléromètres sur la structure d'expérimentation ;
- la figure 4 est un diagramme qui compare les spectres des efforts résultant respectivement d'un impact avec un marteau muni d'un embout en caoutchouc et avec un marteau muni d'un embout en nylon ;
- la figure 5 représente le spectre de réponse d'une chaîne perturbée ;
- la figure 6 est un exemple de réponse temporelle de la structure d'essai à un choc enregistré au moyen d'une chaîne de mesure testée selon le procédé de l'invention ;
- la figure 7 est une analyse en terme de spectre de réponse aux chocs de la réponse temporelle représentée sur la figure 6 ;
- la figure 8 représente la réponse temporelle de la figure 6 filtrée avec un filtre passe bas ;
- la figure 9 représente l'analyse en terme de spectre de réponse aux chocs de la réponse temporelle la structure d'expérimentation acquise au moyen d'une autre chaîne de mesure ;
- la figure 10 est une courbe correspondant, à celle de la figure 8 (réponse temporelle filtrée avec un filtre passe bas) ;
- la figure 11 est un spectre de réponse aux chocs pour deux capteurs complémentaires utilisés simultanément.

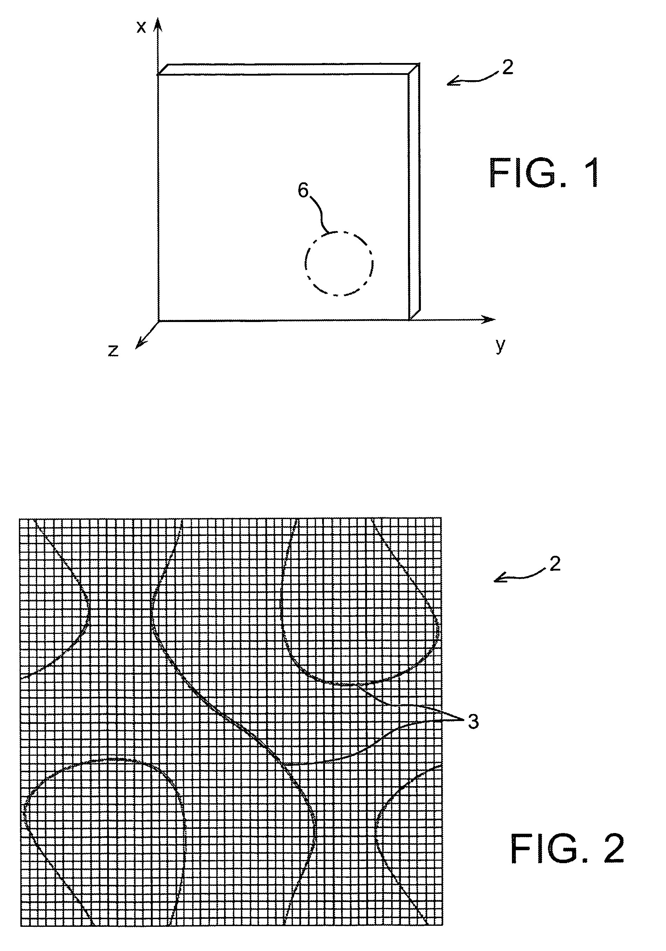

On a représenté sur la figure 1 un exemple de structure expérimentale pour la mise en oeuvre du procédé de qualification d'une chaîne de mesure de chocs pyrotechniques. Cette structure est une plaque carrée 2 de 1025 mm de côté et de 5mm d'épaisseur. Cette plaque est en Duralinox (AG4MC) ; son module d'Young E est égal à 68,6x10⁹Pa et sa masse volumique p est égale à 2,65x10³kg/m³. Son coefficient de poisson v=0,3. La plaque 2 est maintenue dans un plan vertical x, y par des liaisons souples à ses quatre coins de manière avoir des conditions aux limites libres et à différencier les modes de vibration rigides des premiers modes élastiques.

Dans une première étape du procédé on effectue une analyse modale théorique de la structure d'essai choisie. Cette analyse est réalisée par une modélisation aux éléments finis par exemple avec un logiciel de calcul aux éléments finis de type SAMCEF de la société SAMTECH. Pour ce faire, on cherche un compromis entre la précision du résultat du calcul et le temps nécessaire pour l'exécuter. On réalise plusieurs maillages de la structure d'essai 2 et on compare les résultats obtenus avec ces maillages. Au final, on sélectionne le maillage le plus grossier à partir duquel les résultats demeurent inchangés. Il s'agit là d'une démarche habituelle en modélisation aux éléments finis. En conséquence, elle ne sera pas décrite en détail.

En comparant les résultats des maillages comportant 50x50 éléments avec un maillage comportant 100x100 éléments avec différentes configurations de conditions aux limites, il a été déterminé que le modèle comportant 50x50 éléments est en moyenne représentatif de la dynamique de la structure expérimentale. On a noté certains écarts dus à la présence de modes doubles du fait que la plaque est idéalement symétrique, mais aussi au niveau des conditions aux limites. Le modèle encastré-libre ne possède pas de mode double et donne les meilleurs résultats. Le modèle comportant 50x50 éléments est suffisamment précis pour être utilisé pour l'essai envisagé.

Le tableau I ci-dessous présente les fréquences propres des quarante premiers modes élastiques de la plaque avec des conditions aux limites libre-libre.

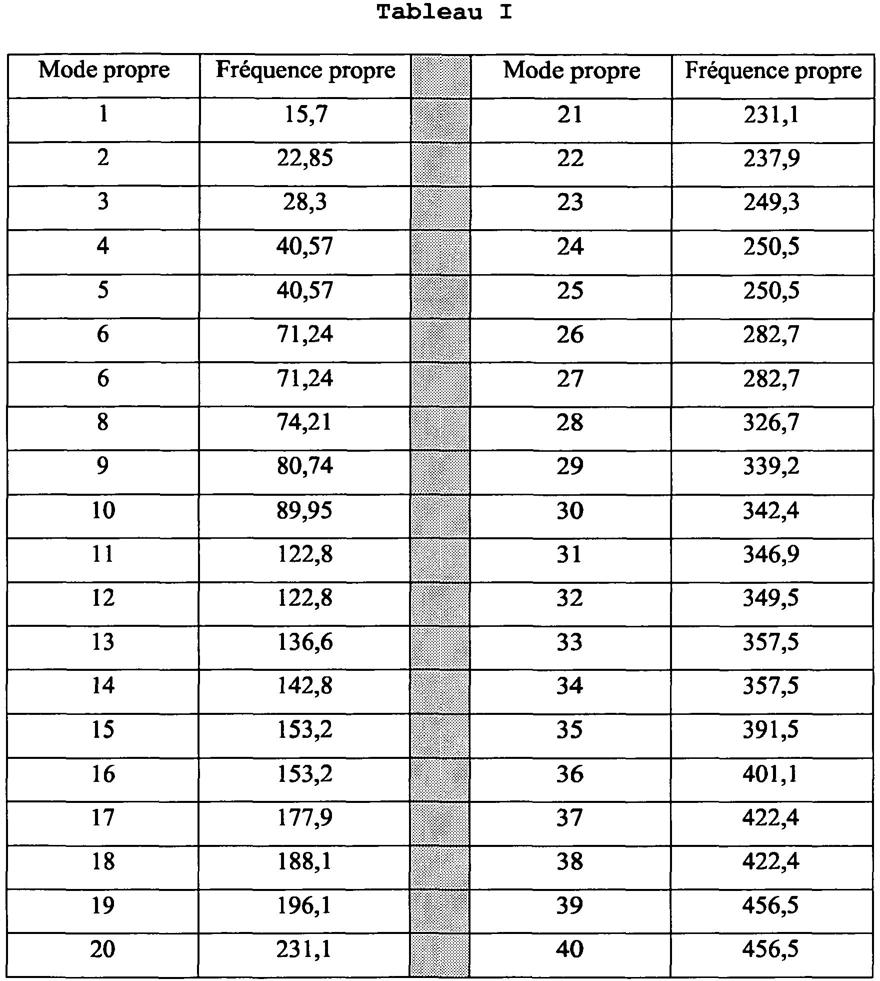

On se limite aux quarante premiers modes de vibrations car ils concernent le domaine de fréquences jusqu'à quasiment 500Hz, c'est-à-dire qu'ils couvrent largement le domaine de fréquences dont la mesure est l'objet de l'invention. Le calcul permet ainsi de définir, pour chaque fréquence, les lignes nodales, c'est-à-dire les lignes correspondant aux noeuds de vibration de la plaque à la fréquence donnée où il n'y a pas de déplacement. A titre d'exemple, on a représenté sur la figure 2 les lignes nodales 3 du mode de vibration élastique 15.

Le domaine de fréquences étudié dans l'exemple décrit se situe entre 1 Hz et 1000Hz, et plus précisément entre 50Hz et 250Hz. Toutefois, le procédé de l'invention s'applique à tout domaine de fréquences.

Le point d'excitation 4 est choisi de manière à faire ressortir les modes de vibration dans la bande de fréquence étudiée, c'est-à-dire de 50 Hz à 250Hz. Ce point est donc choisi en dehors des lignes nodales des modes de vibration élastiques 6 à 23 compris entre ces deux bornes (voir tableau I).

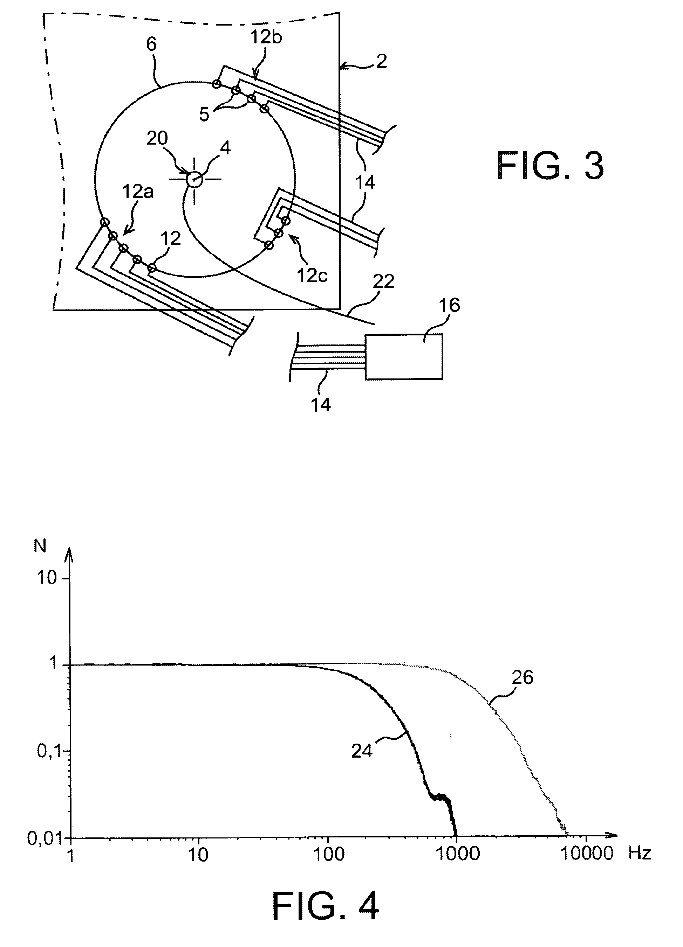

On a représenté sur la figure 3 un exemple d'implantation de capteurs de mesure 12 sur la structure d'essai 2 de la figure 1. Les points de mesure 5 sont également choisis en dehors des lignes nodales. Ils sont en outre disposés sur un cercle 6 centré sur le point d'excitation 4 de façon que, lors de l'excitation par impact, par détonation ou par tout autre moyen, ils voient le même niveau d'onde de chocs et à peu près la même réponse de la structure expérimentale 2.

Comme on le remarque, le cercle 6 sur lequel sont disposés les points de mesure se trouve sensiblement dans le quart inférieur droit de la plaque (selon la figure 1). Les capteurs d'accélération 12 ou accéléromètres sont répartis en trois groupes respectivement un groupe 12a de cinq capteurs, un groupe 12b de quatre capteurs et un groupe 12c de trois capteurs.

Chaque chaîne de mesure est constituée de façon générale de trois sous-ensembles, un accéléromètre et son éventuel montage spécifique, un conditionneur, ayant une fonction d'amplification du signal, et un système électronique d'acquisition des données.

Un système de traitement des données permet d'en extraire les SRC et le spectre de Fourrier. Chacun des capteurs est relié par un câble de liaison 14 à un système d'électronique d'acquisition 16.

Dans l'exemple, le moyen d'excitation est un détonateur 20. Ce détonateur est de type classique. Il comporte par exemple une charge explosive de 200mg d'hexogène et un mélange amorçant de 200mg. Il est relié par deux fils de cuivre 22 à un dispositif de mise à feu (non représenté).

Deux systèmes d'acquisition ont été utilisés : le Nicolet Odyssey et Nicolet Multipro. Le système Nicolet Odyssey est usuellement utilisé pour l'acquisition de mesures à basse fréquence lors des essais de séparation inter-étages tandis que le système Nicolet Multipro est dédié à l'acquisition de mesures à haute fréquence.

L'utilisation de ces deux systèmes en parallèle permet une redondance de l'acquisition pour les mêmes voies de mesure. Elle permet d'autre part, de détecter la présence du décalage de zéro sur certaines mesures. Enfin, elle permet de visualiser le contenu fréquentiel du signal jusqu'à plusieurs centaines de kHz.

Les systèmes d'acquisition Nicolet Odyssey sont équipés de cartes OD-100 et de cartes de conditionnement (alimentation, préfiltrage) des capteurs.

Les systèmes d'acquisition Nicolet Multipro sont équipés de carte type 150. L'exploitation des mesures a été réalisée sous le logiciel Dynaworks. Le dépouillement consiste à analyser le signal temporel, à calculer les spectres en réponse aux chocs positif et négatif à partir de celui-ci avec un facteur d'amortissement Q=10 et le spectre de Fourrier.

Afin de minimiser les éventuels problèmes de mesure, la longueur des câbles a été limitée à 25 mètres. On a déposé un point de colle cyanoacrylate sur chaque connecteur susceptible de se dévisser au cours du choc. Les capteurs à électronique incorporées ont été alimentés avec un courant d'alimentation égal à 10mA. Les câbles de sortie des accéléromètres ont été fixés en un seul point sur la plaque 2. Les lignes de mise à feu du détonateur ont été écartées des câbles de mesure des accéléromètres. Les câbles en sortie de capteurs ont été orientés vers l'extérieur de la plaque, c'est-à-dire à l'opposé de la zone de détonation.

Dans une première étape du procédé, on a conduit une analyse modale expérimentale avec un marteau. Le marteau à embout caoutchouc utilisé était du type de la référence K291A de la société PCB Piezotronics Inc. Ce type d'excitation de la structure expérimentale a été choisi pour sa simplicité de mise en oeuvre, mais aussi parce que le mode d'excitation par impact correspond au domaine de fréquences étudié. Le marteau possédait deux embouts : un embout en caoutchouc 24 et un embout en nylon 26. On a représenté sur la figure 4 une comparaison des spectres des efforts exercés respectivement par le marteau comportant un embout en caoutchouc et par le marteau comportant un embout en nylon. On constate qu'un impact réalisé avec le marteau équipé de l'embout en nylon permet d'injecter de l'énergie jusqu'à environ 1kHz tandis qu'un impact effectué au moyen d'un marteau équipé de l'embout en caoutchouc limite l'excitation à une fréquence de 250Hz environ. Pour extraire correctement la base modale jusqu'à 250Hz, l'utilisation du marteau comportant un embout en caoutchouc est donc suffisante.

La première phase des essais est la vérification des fréquences propres déterminées lors de l'analyse modale théorique. Les fréquences propres sont obtenues expérimentalement par la détermination des fonctions de transfert accélérations/effort injecté pour chaque point de mesure.

Dans l'exemple, sur le domaine de fréquences étudié (50Hz à 250Hz) l'écart maximum entre les fréquences propres théoriques et les fréquences propres expérimentales ne dépassait pas 4%. Cette bonne corrélation entre le calcul théorique et les essais s'explique par la simplicité de la structure d'essai retenue et par la qualité de la modélisation aux éléments finis. Les petits écarts observés sur les fréquences peuvent être attribués aux masses parfois non négligeables des capteurs qui modifient sensiblement la réponse de la structure. Ce résultat justifie d'une part le bon fonctionnement de l'ensemble des capteurs à l'impact mécanique au marteau, d'autre part le choix judicieux du point d'impact et du positionnement des capteurs.

Dans une seconde phase, on qualifie l'aptitude des chaînes mises en oeuvre à mesurer une réponse structurale.

Pour cela, on déduit les spectres de réponse positif et négatif de la réponse temporelle de la structure d'expérimentation 2 à l'excitation au marteau et on calcule le différentiel entre les spectres positif et négatif. S'il est significativement différent de zéro, la chaîne de mesure présente un décalage de zéro et elle ne peut être retenue. En effet, la plaque excitée par impact au marteau vibre selon ses modes propres autour d'une position initiale d'équilibre. De ce fait, le différentiel des deux SRC doit tendre vers zéro à toutes les fréquences.

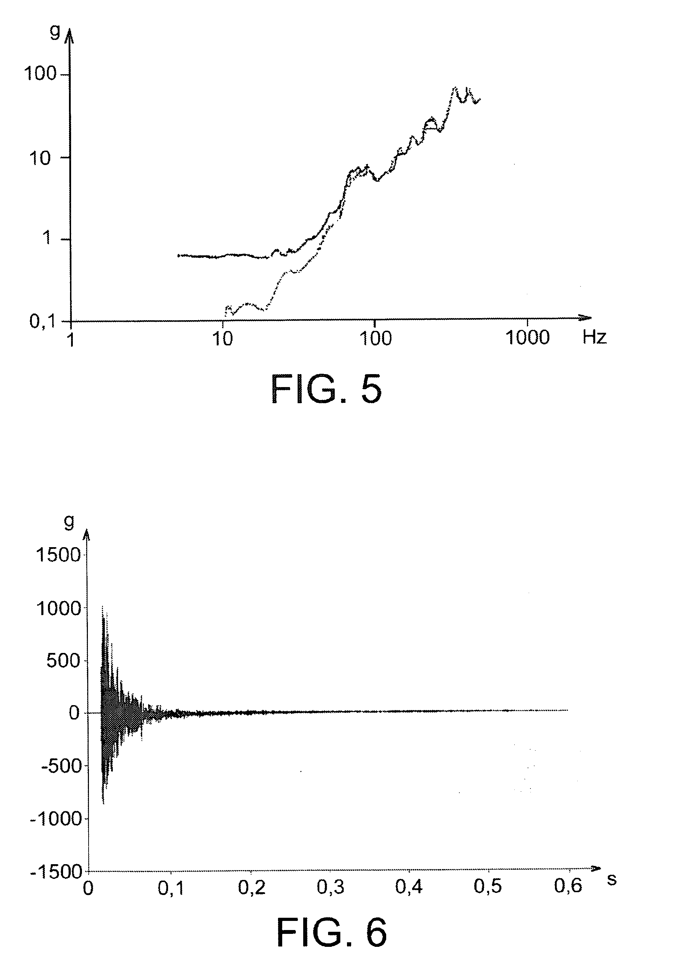

La figure 5 montre une chaîne de mesure dont la réponse est perturbée et qui ne peut être retenue (capteur Endevco 7270AM6). Toutefois, dans l'ensemble, la plupart des chaînes passent ce test avec succès.

L'essai au marteau a été suivi d'un second essai en environnement détonique pour lequel les accélérations subies par la structure 2 sont supérieures à 30 000g. Toutes les mesures ont saturé en début de chocs à environ ± 1000g car la sensibilité des chaînes de mesures a été fixée à 10mV/g. Ceci correspond à un signal de sortie de conditionneur égal à 10volts. Les chaînes ont été réglées de manière à pouvoir enregistrer une accélération proche de quelques « g ».

Lors de la visualisation du signal temporel différents cas se sont présentés. Dans un premier cas il est apparu immédiatement que le signal temporel était très perturbé. Il saturait et la mesure n'était pas exploitable. La chaîne de mesure, et plus précisément le capteur de cette chaîne doit évidemment être rejeté.

Dans un deuxième cas, le signal temporel semblait très correct. Il présentait l'apparence représentée sur la figure 6. Cette courbe représente les accélérations positive et négative en fonction du temps mesuré par l'un des capteurs 12 montés sur la structure expérimentale.

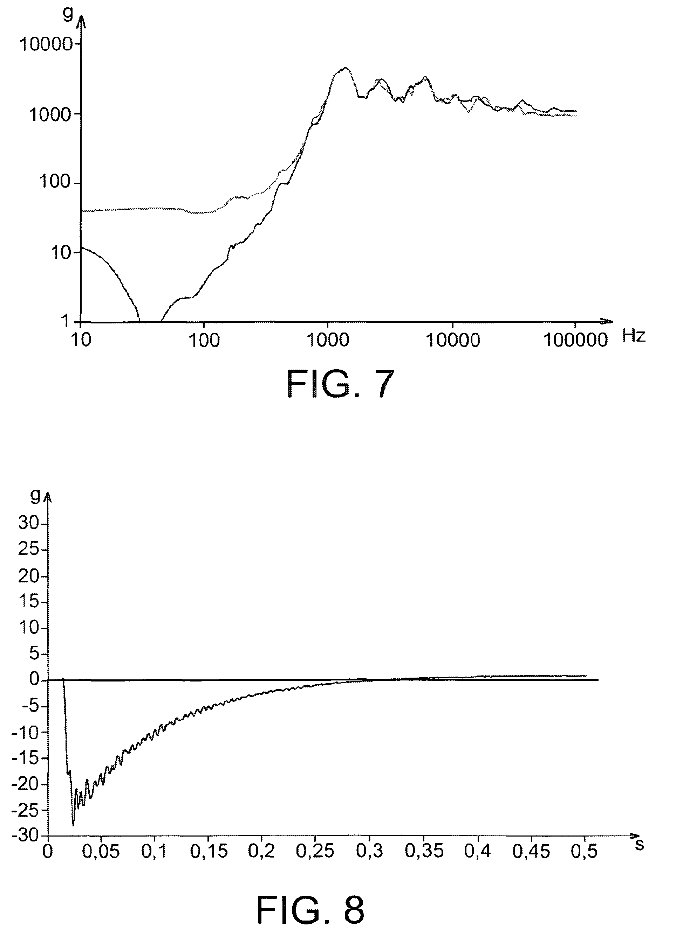

La courbe de la figure 6 est inexploitable en l'état. Le signal doit donc analysé en terme de spectre de réponse aux chocs (SRC). Dans un exemple, représenté sur la figure 7, les spectres de réponse aux chocs positif et négatif ne se superposent pas en dessous d'une fréquence de 600Hz environ.

En filtrant le signal temporel avec un filtre passe-bas ayant une fréquence de coupure à 200Hz, on fait apparaître un parasite appelé décalage de zéro (« zero-shift » en anglais) (figure 8).

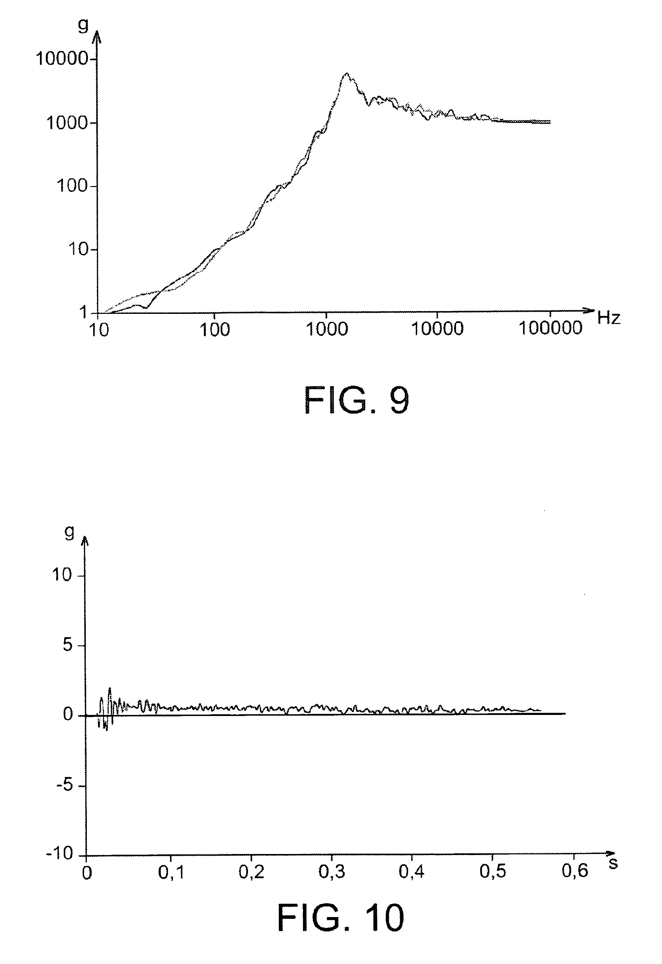

On a représenté sur la figure 9 le contenu fréquentiel d'une mesure fournie par une chaîne constituée d'un capteur PCB 350B2, fabriqué et commercialisé par la société PCB Piezotronics Inc., associé à un conditionneur Endevco 133. Pour un signal temporel brut apparemment identique à celui de la figure 6, le contenu fréquentiel est différent. Les spectres de réponse aux chocs négatif et positif se superposent dans toute la gamme de fréquence.

En filtrant le signal temporel avec un filtre passe bas ayant la même fréquence de coupure de 200Hz, on constate que le retour à zéro après le choc n'est pas parfait, mais qu'il est tout de même très proche de zéro (figure 10). En conséquence, la première chaîne de mesure, qui fait apparaître une perturbation de la mesure (le décalage de zéro), ne convient pas tandis que la seconde chaîne de mesure qui ne montre pas ce défaut, peut être retenue.

Contrairement aux essais d'impact mécanique, très peu de chaînes ont fourni un résultat exploitable.

Les essais ont permis de conclure que les capteurs les plus aptes à présenter un bon compromis entre sensibilité et tenue aux chocs doivent comporter, comme le capteur PCB 350B2, un filtre mécanique combiné à un filtrage électrique interne aux capteurs afin de protéger l'élément sensible et l'électronique intégrée.

Un tel capteur est de préférence de type à cisaillement. Il comporte un cristal raccordé à une base et un convertisseur d'impédance. Une gorge d'isolation de contrainte est prévue entre le corps et la base.

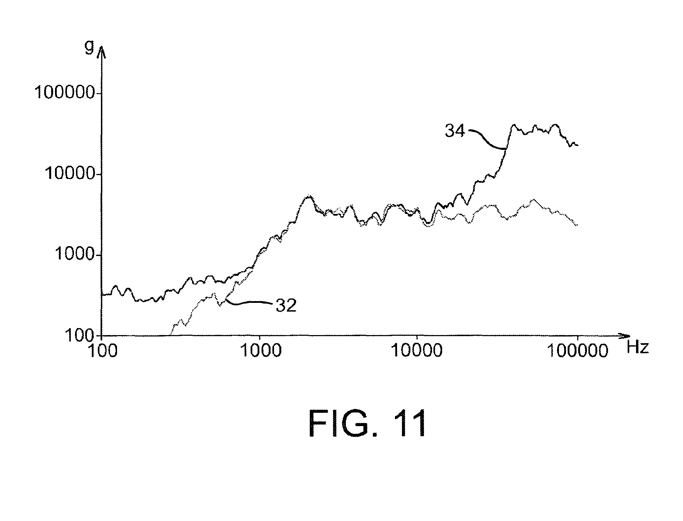

On a représenté sur la figure 11 une réponse fréquentielle enregistrée au moyen d'une chaîne de mesure conforme à l'invention dans laquelle les moyens de mesure comprennent un capteur dédié à la mesure des basses fréquences et un capteur dédié à la mesure des hautes fréquences. Dans l'exemple, le capteur « basse fréquence » était du type PCB 350B2. En effet, comme exposé précédemment, ce type de capteur est apte à supporter de fortes accélérations sans détérioration de ses performances. Cette aptitude a été démontrée par le procédé de qualification, comme expliqué. Ce capteur est associé à un capteur de type Endevco 7270A. Ces deux capteurs sont complémentaires. En basse fréquence, on prend en compte les données 32 du premier capteur. En haute fréquence, celles 34 du second capteur. Dans les fréquences intermédiaires, les mesures des deux capteurs se recoupent.

## Revendications

1. Chaîne de mesure de chocs pyrotechniques destinée à la mesure des accélérations dans une gamme de 1 g à 500000 g et des fréquences dans une gamme de 1 Hz à 50000 Hz, comprenant des moyens de mesure et un système d'acquisition des mesures, dans laquelle les moyens de mesure comprennent deux types de capteurs distincts, à savoir un capteur spécialement prévu pour la mesure des hautes fréquences et des hautes accélérations et un capteur spécialement prévu pour la mesure des basses fréquences et des basses accélérations, ce dernier capteur ayant fait l'objet d'une qualification qui démontre son aptitude à supporter les hautes fréquences et les hautes accélérations sans dégradation de ses performances à basses fréquences et à basses accélérations et comprenant un amortisseur mécanique et un amortisseur électrique intégrés.

2. Chaîne de mesure selon la revendication 1, **caractérisée en ce que** le capteur prévu pour la mesure des basses fréquences et des basses accélérations est un capteur de type PCB350B02 de la société PCB Piezotronics Inc.

3. Chaîne de mesure selon l'une des revendications 1 ou 2 caractérisée en que le capteur prévu pour la mesure des hautes fréquences et des hautes accélérations est un capteur de type 727OA de la société Endevco Inc.

4. Procédé de qualification d'une chaîne de mesure de chocs pyrotechniques, destinée à la mesure des accélérations dans une gamme de 1 g à 500000g et des fréquences dans une gamme de 1 Hz à 50000 Hz, cette chaîne comprenant au moins un accéléromètre (12) et un système d'acquisition (16) du signal de l' accéléromètre, comprenant les étapes suivantes :
- on choisit un accéléromètre (12) à qualifier, cet accéléromètre étant prévu pour la mesure des basses fréquences;
- on teste cet accéléromètre dans un environnement à très fortes accélérations ;
- on vérifie qu'il est fiable et exempt de décalage de zéro et en ce que l'on teste l'accéléromètre par les étapes suivantes :
- on choisit une structure d'expérimentation (2) ;
- on réalise une analyse modale théorique de cette structure (2) afin de déterminer ses n premières fréquences propres ainsi que les lignes nodales correspondant à ces n fréquences propres ;
- on choisit un point d'excitation (4) de la structure expérimentale (2) et au moins un point de mesure (5) en dehors des lignes nodales correspondants aux n premières fréquences propres ;
- on réalise une analyse modale expérimentale de la structure d'expérimentation en l'excitant au point d'excitation (4) ;
- on acquiert la réponse temporelle de la structure d'expérimentation (2) à l'excitation.

5. Procédé de qualification selon la revendication 4, **caractérisé en ce que** le ou les points de mesure (5) sont choisis sur un cercle (6) centré au point d'excitation (4).

6. Procédé de qualification selon l'une des revendications 4 ou 5, **caractérisé en ce que** l'on injecte de l'énergie dans la structure d'expérimentation jusqu'à une fréquence maximale de 250Hz environ.

7. Procédé de qualification selon l'une des revendications 4 ou 6, **caractérisé en ce que** l'excitation de la structure d'expérimentation (2) à son point d'excitation est réalisée en appliquant un choc mécanique au moyen d'un marteau.

8. Procédé de qualification selon la revendication 7, **caractérisé en ce que** le marteau possède un embout en caoutchouc.

9. Procédé de qualification selon l'une des revendications 4 à 8, **caractérisé en ce que** l'on réalise l'étape de test de l'accéléromètre par les étapes suivantes :
- on déduit les spectres de réponse positif et négatif de la réponse temporelle de la structure d'expérimentation à l'excitation ;
- on calcule le différentiel entre les spectres de réponse positif et négatif ;
- on élimine les chaînes de mesure pour lesquelles ce différentiel diffère significativement de zéro à une ou plusieurs fréquences d'excitation.

## Claims

1. Pyrotechnic shocks measurement chain intended to measure accelerations in a range of 1 g to 500,000 g and frequencies in a range of 1 Hz to 50,000 Hz, comprising measurement means and a system for acquiring the measurements, wherein the measurement means comprise two types of separate sensors namely a sensor specially provided to measure high frequencies and high accelerations and a sensor specially provided to measure low frequencies and low accelerations, this latter sensor having been subjected to qualification showing that it is capable of withstanding high frequencies and high accelerations without degradation of its performance at low frequencies and low accelerations and comprising an integrated mechanical damper and integrated electric damper.

2. The measurement chain according to claim 1, **characterized in that** the sensor provided for measuring low frequencies and low accelerations is a sensor of PCB350B02 type by PCB Piezotronics Inc.

3. The measurement chain according to one of claims 1 or 2 **characterized in that** the sensor provided for measuring high frequencies and high accelerations is a sensor of type 7270A by Endevco Inc.

4. A method for qualifying a pyrotechnic shock measurement chain intended to measure accelerations in a range of 1 g to 500,000 g and frequencies in a range of 1 Hz to 50,000 Hz, this chain comprising at least one accelerometer (12) and an acquisition system (16) acquiring the accelerometer's signal, comprising the following steps:
■ an accelerometer (12) to be qualified is chosen, this accelerometer being intended to measure low frequencies;
■ this accelerometer is tested in an environment having very strong accelerations;
■ it is verified that it is reliable and free of zero-shift, and in that the accelerometer is tested by the following steps:
- an experimental structure (2) is chosen;
- theoretical modal analysis of this structure (2) is performed to determine its n first own frequencies and the nodal lines corresponding to these n own frequencies;
- an excitation point (4) of the experimental structure (2) is chosen and at least one measurement point (5) outside the nodal lines corresponding to the n first own frequencies;
- experimental modal analysis of the experimental structure is conducted by excitation thereof at the excitation point (4);
- the time response is acquired of the experimental structure (2) on excitation.

5. A qualification method according to claim 4 **characterized in that** the measurement point or points (5) are chosen on a circle (6) centered on the excitation point (4).

6. The qualification method according to one of claims 4 or 5 **characterized in that** energy is injected into the experimental structure up to a maximum frequency of about 250 Hz.

7. The qualification method according to one of claims 4 or 6 **characterized in that** the excitation of the experimental structure (2) at its excitation point is performed by applying a mechanical impact using a hammed.

8. The qualification method according to claim 7 **characterized in that** the hammer has a rubber endpiece.

9. The qualification method according to one of claims 4 to 8 **characterized in that** the accelerometer test step is carried out by the following steps:
- the positive and negative response spectra are inferred from the time response of the experimental structure on excitation;
- the differential is calculated between the positive and negative response spectra;
- the measurement chains for which this differential differs significantly from zero at one or more excitation frequencies are eliminated.

## Patentansprüche

1. Kette zum Messen von pyrotechnischen Stößen, die für die Messung von Beschleunigungen in einem Bereich von 1 g bis 500.000 g sowie von Frequenzen in einem Bereich von 1 Hz bis 50.000 Hz bestimmt ist, umfassend Messmittel und ein System zur Erfassung der Messungen, wobei die Messmittel zwei verschiedene Typen von Sensoren umfassen, nämlich einen Sensor, der speziell für die Messung von hohen Frequenzen und von großen Beschleunigungen vorgesehen ist, sowie einen Sensor, der speziell für die Messung von niedrigen Frequenzen und von kleinen Beschleunigungen vorgesehen ist, wobei dieser letztgenannte Sensor Gegenstand einer Bewertung war, die seine Eignung zeigt, hohe Frequenzen und große Beschleunigungen ohne Verschlechterung seiner Leistungen bei niedrigen Frequenzen und bei kleinen Beschleunigungen auszuhalten, und der integriert einen mechanischen Dämpfer und einen elektrischen Dämpfer umfasst.

2. Kette zum Messen nach Anspruch 1, **dadurch gekennzeichnet, dass** der Sensor, der für die Messung der niedrigen Frequenzen und der kleinen Beschleunigungen vorgesehen ist, ein Sensor vom Typ PCB350B02 des Unternehmens PCB Piezotronics Inc. ist.

3. Kette zum Messen nach einem der Ansprüche 1 oder 2, **dadurch gekennzeichnet, dass** der Sensor, der zum Messen der hohen Frequenzen und der großen Beschleunigungen vorgesehen ist, ein Sensor vom Typ 727OA des Unternehmens Endevco Inc. ist.

4. Verfahren zur Bewertung einer Kette zum Messen von pyrotechnischen Stößen, die zur Messung von Beschleunigungen in einem Bereich von 1 g bis 500.000 g sowie von Frequenzen in einem Bereich von 1 Hz bis 50.000 Hz bestimmt ist, wobei diese Kette wenigstens einen Beschleunigungsmesser (12) sowie ein System (16) zur Erfassung des Signals des Beschleunigungsmessers enthält, umfassend die folgenden Schritte:
- Man wählt einen zu bewertenden Beschleunigungsmesser (12), wobei dieser Beschleunigungsmesser für die Messung von niedrigen Frequenzen vorgesehen ist;
- man testet diesen Beschleunigungsmesser in einer Umgebung mit sehr starken Beschleunigungen;
- man überprüft, ob er zuverlässig und frei von einem Nullversatz ist, und man testet den Beschleunigungsmesser mittels der folgenden Schritte:
- Man wählt eine Experimentierstruktur (2);
- man realisiert eine theoretische modale Analyse dieser Struktur (2), um ihre n ersten Eigenfrequenzen zu bestimmen, sowie die Knotenlinien, die diesen n Eigenfrequenzen entsprechen;
- man wählt einen Erregungspunkt (4) der Experimentalstruktur (2) sowie wenigstens einen Messpunkt (5) außerhalb der Knotenlinien, die den n ersten Eigenfrequenzen entsprechen;
- man realisiert eine experimentelle modale Analyse der Experimentierstruktur, indem man sie am Erregungspunkt (4) erregt;
- man erfasst die zeitliche Antwort der Experimentierstruktur (2) auf die Erregung.

5. Verfahren zur Bewertung nach Anspruch 4, **dadurch gekennzeichnet, dass** der oder die Messpunkt(e) (5) auf einem Kreis (6) gewählt ist/sind, der um den Erregungspunkt (4) zentriert ist.

6. Verfahren zur Bewertung nach einem der Ansprüche 4 oder 5, **dadurch gekennzeichnet, dass** man Energie in die Experimentierstruktur bis zu einer Maximalfrequenz von ungefähr 250 Hz injiziert.

7. Verfahren zur Bewertung nach einem der Ansprüche 4 oder 6, **dadurch gekennzeichnet, dass** die Erregung der Experimentierstruktur (2) an ihrem Erregungspunkt realisiert wird, indem man mit Hilfe eines Hammers einen mechanischen Stoß ausübt.

8. Verfahren zur Bewertung nach Anspruch 7, **dadurch gekennzeichnet, dass** der Hammer ein Ansatzstück aus Kautschuk besitzt.

9. Verfahren zur Bewertung nach einem der Ansprüche 4 bis 8, **dadurch gekennzeichnet, dass** man den Schritt des Testens des Beschleunigungsmessers mit Hilfe der folgenden Schritte realisiert:
- Man deduziert die Spektren der positiven und negativen Antwort aus der zeitlichen Antwort der Experimentierstruktur auf die Erregung;
- man berechnet das Differenzial zwischen den Spektren der positiven und negativen Antwort;
- man eliminiert die Messketten, für die dieses Differenzial bei einer oder mehreren Erregungsfrequenzen signifikant von Null abweicht.
